# EUROPEAN PATENT SPECIFICATION

(11) **EP 1 591 236 B1**
(45) Date of publication and mention of the grant of the patent: **23.12.2009**
(21) Application number: 05103240.7
(22) Date of filing: 21.04.2005
(51) Int. Cl.: B32B 27/20, B32B 27/32

(54) **Multilayer polypropylene film, co-extruded and heat-sealable to make hermetically closed, easily opened packages, and relative production method**
Heisssiegelbare, coextrudierte mehrschichtige Polypropylenfolie zum Herstellen von hermetisch verschlossenen, leicht zu öffnenden Verpackungen und Verfahren zur Herstellung
Feuille multicouche, coextrudée et thermoscellable, en polypropylène, pour la fabrication d'emballages fermés hermetiquement à ouverture facile et le procédé de fabrication

(30) Priority: 26.04.2004 IT UD20040079
(43) Date of publication of application: 02.11.2005
(73) Proprietor: TAGHLEEF INDUSTRIES SPA CON SOCIO UNICO, 33058 San Giorgio Di Nogaro (UD) (IT)
(72) Inventor: Piasente, Francesca, 33058, S. Giorgio di Nogaro (UD) (IT); De Roni, Paolo, 33084, Cordenons (PN) (IT)
(74) Representative: Petraz, Davide Luigi

(56) References cited:
- EP-A- 1 080 881
- US-A- 5 501 901
- US-B1- 6 521 333

## Description

### FIELD OF THE INVENTION

The present invention concerns a multilayer polypropylene film, co-extruded and heat-sealable, able to be used advantageously, although not exclusively, to make hermetically closed, easily opened packages.

The multilayer film according to the present invention is advantageously a biaxially oriented polypropylene film (BOPP), that is, with a molecular structure oriented both in the direction of the machine and also in a direction transverse to the machine.

The multilayer film according to the present invention can be employed both as a monofilm and also as part of a multilayer structure, for example in a "paper/film" or "film/film" coupling, in order to create a wrapping with characteristics of easy opening for the final user, particularly without tears and rents.

Typically, the film according to the invention is used to pack dry food products, even though every other suitable use can be provided within the frame work of the present invention.

By "easy opening", here and in the following description, we mean the possibility of opening the package avoiding the uncontrolled and often unwanted tearing of the wrapping, with the consequent reduced usability and aesthetics of the package, and the worsened conditions of food preservation.

The invention also concerns the method to produce the multilayer film, and the package made with a multilayer film thus obtained.

### BACKGROUND OF THE INVENTION

It is usual to use flexible wrappers consisting of monofilm, or multilayer structures comprising two or more coupled films, with which it is possible to hermetically close a package, in order to ensure the good preservation of the product contained therein until the moment of use.

In the case of flexible wrappers intended for the food industry, it is usual to use coupled/poly-coupled films in which the package is closed by heat-sealing, by using cold seals or in general heat-sealing lacquers.

In the first case, the most typical in the BOPP field, heat-sealing is obtained thanks to an outer layer of polypropylene, copolymer or terpolymer, which, at the working temperatures in the packaging machines, is able to soften and, under pressure, allows an adequate cohesion between the walls that make up the wrapper itself.

Alternative solutions are those that use films covered with suitable heat-sealing lacquers, which achieve cohesion substantially with similar mechanisms. It is also very common to use cold seals: in this case the cohesion between the walls exploits the adhesiveness of a cold glue which, thanks to a simple application under pressure, allows a good level of cohesion. This technique is used especially for food products that are sensitive to heat, such as for example chocolate and ice cream.

Another important characteristic for the good preservation of the packaged product is also a suitable permeability to humidity and gases.

To be more exact, it is particularly important to control the passage of humidity in dry products, characterized by a certain crunchiness, which are notoriously very sensitive to humidity. Controlled permeability to oxygen, on the contrary, is fundamental for all those products that easily suffer from phenomena of oxidation, such as for example potato chips, which become rancid due to the oxidation of the fats.

Films used to make flexible packages must also possess particular characteristics of slipperiness, which makes it possible to use them correctly in the normal packaging machines.

In the common use of this type of wrappers, one of the limits of current techniques is obvious. The wrapper must be and must remain well closed in order to preserve and protect the content from possible outside pollutants; therefore, the film used, in combination with the packaging technique, must allow to obtain hermetically closed seals, resistant to the subsequent handling needed to transport, distribute and store the product in the various sales outlets.

Consequently, in order to open the package, the consumer typically forces the sealed zone brusquely, pulling the sealed lips of the package. This approach often causes an uncontrolled opening of the package, with a large part of the surface of the wrapper being torn. As a consequence, the consumer has less possibility of using the package, which from this moment on will no longer be able to guarantee a sufficient and correct preservation of the content and, in the worst cases, will not even prevent the content from physically spilling out, and consequently falling.

Any tear in the wrapper also causes an aesthetic damage to the package, and this may not be wanted, for example, in public premises.

In order to improve the opening of packages, while yet ensuring a correct preservation of the product (hermetic seal), various solutions have been adopted in the state of the art.

A first of these solutions provides the clear indication of opening the package by means of a mechanical cut, for example with scissors or suchlike; this solution, however, is totally unsuitable for children, who are normally those who most use foodstuffs contained in such packages, and it is in any case risky and not very practical for adults too.

Another known solution provides a lateral incision on the package, in order to allow the controlled "breakage" of the package; the lead-in to the break may weaken the structure, however, and determine the opening of the package already during the steps of distribution and storage; in any case, the results are not often satisfactory.

Another known solution provides to use "tear strips", normally applied in the production step of the package; in this case, in correspondence with the strip, it is possible to have an opening that does not guarantee a perfect hermetic seal, and which therefore can cause a pollution or poor preservation of the product.

Another solution provides to apply peel-off cold seals: although they guarantee good performance in terms of opening/closing the package, this type of seals are used only when strictly necessary due to the possible food allergies that they can cause in more sensitive consumers.

Another known solution provides to use poly-coupled films, wherein one of the layers that then constitute the seal is produced specifically not in BOPP, so that in itself it has peeling characteristics. This solution has the disadvantage, however, that it requires costly working, obtained with steps of molding, rolling and applying an outer covering layer, after the extrusion of the BOPP.

With regard to the guarantee as a barrier to gases, and controlled permeability to humidity, lacquered and/or metalized BOPP is commonly used.

In the films commonly used, good machine workability is obtained by imparting to the film a suitable mechanical rigidity and an adequate coefficient of friction (COF). The COF is an index of the surface slipperiness of the film, and this value is fundamental for machine workability on packaging lines. A low COF is an indicator of low friction, and hence high slipperiness. A typical range of COF, to have good workability, is between 0.20 and 0.50.

From the above it is clear that, in the state of the art, no heat-sealable BOPP film exists which can guarantee at the same time great ease in the opening/closing operations, an adequate barrier to the passage of humidity, good machine workability, a satisfactory level of resistance in the seal and, not least, that an aesthetic effect, comparable to normal films to which components to increase their peeling ability have not been added, can be maintained.

The state of the art proposes, for example in US-B1-6.521.333, a solution wherein a multilayer polymeric film is produced comprising at least an interlayer to which a component is added containing calcium carbonate, able to create vacuums in said interlayer. In this document, the purpose of the addition of the component that creates vacuums ("voiding agent") is to facilitate the workability of the film, preventing the formation of wrinkles during its passage through the machine, allowing a better aesthetics and integral welding.

This prior art document defines a very high range (0-60%) of the possible ratio in weight between the voiding agent and the overall weight of the interlayer, but does not identify a sufficiently precise quantity of said additive component such as to attribute to the film characteristics of peeling ability, without compromising the characteristics of weldability and the aesthetic appearance, which is the purpose of the present invention.

To be more exact, the purpose of US-B1.6.521.333 is not to increase the characteristics of peeling ability of the plastic film.

The purpose of the present invention is therefore to obviate this lack, and in general to solve the shortcomings of the state of the art, making a multilayer film that can be used both as a monofilm and also in a coupled structure with one or more sheets or layers, which allows an easy opening of the packages while ensuring adequate closing.

Another purpose of the invention is to make a film that guarantees suitable protection to the content of the package in terms of a barrier to gases and humidity, and with characteristics of machine workability adequate for the needs of the packaging machines commonly in use.

Another purpose is to obtain said improved characteristics of peeling ability without compromising the welding properties of the film, and without deteriorating or modifying its overall aesthetic appearance.

Applicant has devised, tested and embodied the present invention to obtain these purposes and to achieve other advantages.

### SUMMARY OF THE INVENTION

The present invention is set forth and characterized in the main claims, while the dependent claims describe variants and other characteristics of the invention.

The heat-sealable multilayer film according to the present invention is preferentially used, though not exclusively, to make hermetically sealed/closed packages by means of heat-sealing, easily opened, and is obtained by means of a process of co-extrusion starting from a number of layers between 3 and 9, advantageously between 3 and 5.

To be more exact, the multilayer film according to the present invention comprises at least an inner layer, or skin, a central layer, or core, and an outer layer, or skin. Here, and in the following description, by inner layer we mean the layer facing towards the inside of the package, that is, towards the product (food) contained; the outer layer indicates the layer located on the outside of the package, that is, the layer suitable to be coupled with paper, aluminum or other suitable material, or suitable to be printed directly, for example with inks or other.

According to a variant, between the inner layer and the central layer, and/or between the central layer and the outer layer, there is at least an interlayer.

According to the invention, the outer layer, suitable for coupling and/or printing, is subjected to a suitable treatment to accentuate its characteristics of adhesiveness for printing inks and adhesives used in rolling operations. By suitable treatment we mean, for example, flame treatment, or treatment with electric discharges (crown treatment), or again plasma treatment, or other treatment of an equivalent type. These treatments, conventional in themselves, have the function of modifying the characteristics of surface roughness and/or of oxidizing the surface of the outer layer in order to make it more receptive to the elements used to confer the desired aesthetic configuration on the externally visible part of the package.

The inner layer, which has characteristics of heat-sealability and is suitable for the hermetic seal of the package, is not normally subjected to a specific treatment in the sense indicated above.

More precisely, the heat-sealable inner layer has characteristics such as to guarantee both an effective sealing for a correct preservation of the product and also, during use, an easy opening which prevents the wrapper being torn.

The central layer constitutes the core of the multilayer film and substantially governs the mechanical properties and rigidity, and also the heat stability thereof, while the outer layer lends itself optimally, as indicated above, to coupling with a covering made of paper, aluminum, film or other, whether printed or not.

According to the invention, the interlayer consists of a mixture of copolymer/terpolymer containing a quantity of CaCO₃ such as to obtain a volumic density, intended as the distribution of the CaCO₃ on a unitary volume of the interlayer, comprised between 30 and 50 kg/m³ in the case of layer density of ≥ 0.85 g/cm³, and comprised between 10 and 30 kg/m³ in the case of layer density of < 0.85 g/cm³.

Using these values of volumic density defined inside a restricted range as the density of the layer varies, Applicant has found excellent results in terms of the increase in peeling ability, keeping substantially unchanged the characteristics of weldability and the aesthetic appearance of the film.

The substantial constancy of the value of volumic density ensures that, as the thickness of the inner layer increases, which can vary from a minimum of 0.5 µm to a maximum of about 10 µm, advantageously between 1 and 5 µm, the particles of CaCO₃ are distributed over the whole volume of the layer, keeping the density substantially constant and at the desired value.

The CaCO₃ is typically inserted in the form of masterbatch in order to improve the workability thereof.

According to a variant, the CaCO₃ is replaced by another inorganic product, for example silicon dioxide, in finely divided solid particles of a size between 0.5 and 10 µm, substantially in the same percentage quantity as indicated above.

According to another variant, the CaCO₃ is replaced by an organic product, consisting for example of reticulated plastic materials, such as polybutylene terephthalate (PBT), PMMA, the organo-silicates, silicones.

The peculiar characteristic of the element added to the mixture of copolymer/terpolymer, particularly of CaCO₃, is that it is characterized by a melting temperature greater than the maximum temperature reached during the working process of the BOPP film; it is therefore a substance which is able to support the working temperatures of the BOPP without melting.

The presence in the interlayer of this component which does not melt during the process of forming the BOPP film, with the values of volumic density as indicated above, determines the formation of an alveolar structure characterized by a suitable distribution of substantially solid micrometric particles enclosed inside air sacs. This alveolar structure, as will be explained later, increases the ease of opening of the wrapper.

It is already known in the state of the art, as recalled above, to use mixtures of polypropylene containing CaCO₃ to be used in a central layer of a multilayer film, in order to impart a particular aesthetic appearance to the product and reduced density.

According to the invention, the CaCO₃ or other additive having the melting characteristics indicated above, is used, instead, as a component of the mixture that constitutes the inner layer, or inner skin, of the multilayer film, in order to create an alveolar structure having desired and specific characteristics.

The alveolar structure, which is formed as indicated above and defines the inner layer of the film, is characterized by a sort of "fragility" of the opening of the seal; however, thanks to the substantially stiffened structure deriving therefrom, this does not allow the breakage caused by opening to propagate to any other part of the layer.

In the initial step, the breakage index is high enough to guarantee adequate safety during transport; as soon as opening, or "peeling", is begun, this index is rapidly lowered and it is very easy to proceed in opening the package without risking tears or rips.

According to another characteristic of the invention, the mixture of copolymers/terpolymers that makes up the inner layer has, in its entirety, a Minimum Sealing Temperature (MST) of less than 120°C, advantageously between 70°C and 105°C.

The use of a mixture with this value of Minimum Sealing Temperature allows a sufficient resistance of the seal before it is necessary to open the package, and an increase in the productivity of the packaging machines with a product of a wide range of sealing.

If such values of temperature of the mixture were not used, the seal, which by its very nature must in any case keep the lips of the package well adhered to each other, according to the type of jaw used and the use of the film as a monofilm or coupled film, would risk opening in an uncontrolled way. This would cause the package, even though not through ripping, to open in an unwanted way.

According to the invention, the central layer can consist either of a homopolymer, which has the characteristic of conferring a compact structure on the entire film, or of a mixture of homopolymer and/or homopolymer/copolymer and/or homopolymer/ terpolymer and CaCO₃ and/or TiO₂, which confers expanded structure characteristics or a different aesthetic appearance on the film.

According to another characteristic of the present invention, the inner layer of the film consists of a mixture of copolymer/terpolymer to which a non-volatile product has been added, chosen for example from among the PMMA, silicones, or organo-silicates.

The addition of this non-volatile product allows to increase the machine workability of the flexible film, ensuring a good slipperiness on the mechanical parts of the packaging machine.

According to the invention, the film has an overall thickness of between 10 and 80 µm, advantageously between 12 and 60 µm. The thicknesses of the inner layer and the outer layer are much lower than the thickness of the central layer and of the interlayers, if any, with a thickness of the skins varying in a range between 0.5 and 10 µm, normally between 0.7 and 3 µm, and the interlayers between 1 and 20 µm, normally between 2 and 10 µm.

In one form of embodiment of the invention, the film consists of a number of layers of between 4 and 9, wherein between the inner layer and the central layer, and/or the central layer and the outer layer, there is at least an interlayer.

The interlayer consists of a homopolymer or a copolymer/terpolymer.

According to the invention, the component with the greater melting temperature is added to the interlayer immediately adjacent to the inner layer. The alveolar structure is formed in a zone not directly involved in the heat-sealing. However, thanks to the very limited thickness of the inner layer with respect to that of the interlayer, once the first traction of opening the lips of the package has been performed, the immediately adjacent interlayer is involved in opening and facilitates said opening without tears and rips thanks to its alveolar structure.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 shows a package for food, partly open, which uses a multilayer polypropylene film, co-extruded and heat-sealable according to the present invention;
- fig. 2 shows a transverse section of a one embodiment of the three-layer film according to the present invention;
- fig. 3 shows a transverse section of a five-layer film according to the present invention.

### DETAILED DESCRIPTION OF SOME PREFERENTIAL FORM OF EMBODIMENT OF THE INVENTION

With reference to the attached figures, the reference number 20 denotes generally a package for food, of the type commonly used for the retail sale of biscuits or suchlike. It is obvious that the illustration represents only an example, as the invention can be applied in any type of package, for food or otherwise, similar or equivalent.

The package 20 is made with a multilayer polypropylene film 10, co-extruded and heat-sealable, which can possibly be printed and/or covered with a film or paper on the outside in order to impart the desired aesthetic and/or advertising image on the package 20.

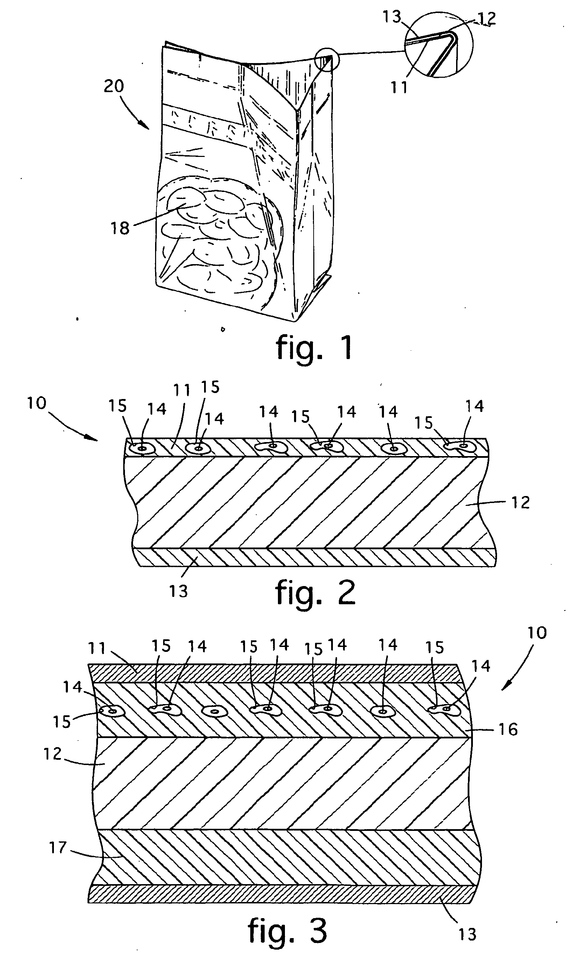

Two embodiments of the film 10, with three layers and with five layers, are shown respectively in figs. 2 and 3. The film 10 comprises an inner layer 11, facing towards the inside of the package 20 and hence towards the food contained therein, a central layer 12 which substantially constitutes the structural element of the film 10, and an outer layer 13, suitable to be printed and/or coupled with an aesthetic covering having the desired graphical annotation, for example representing the product contained and/or the producer or other suitable information.

The inner layer 11 consists of a mixture of copolymer/terpolymer to which an organic or inorganic component is added that is able to support the working temperatures of the BOPP film 10 without melting.

This component is CaCO₃, which is added in a quantity such as to obtain a volumic density, intended as the distribution of the CaCO₃ on a unitary volume of the inner layer, comprised between 30 and 50 kg/m³ in the case of layer density of ≥ 0.85 g/cm³, and comprised between 10 and 30 kg/m³ in the case of layer density of < 0.85 g/cm³.

In other embodiments, the component is silicon dioxide, polybutylene terephthalate, PMMA, an organo-silicate or a silicone.

The presence of this component with these characteristics of melting temperature determines, during the working of the film 10, the formation of a plurality of micrometric granular particles 14 enclosed in air sacs 15, distributed uniformly over the entire volume of the layer with the density values indicated above. In this way an alveolar structure is generated which, as explained above, guarantees great resistance until the first tear, and then yields easily and facilitates the progressive opening without the rent propagating without control to any other part of the package 20. The density values indicated are functional, as said, to obtaining the desired increase in peeling ability of the layer, keeping the welding properties substantially high and the aesthetic appearance of the film 10 unchanged.

In the embodiment according to the invention shown in fig. 3, between the inner layer 11 and the central layer 12, and between the central layer 12 and the outer layer 13, there are interlayers, respectively 16 and 17.

In the embodiment shown in fig. 3, nothing is added to the inner layer 11, while the component is added to the interlayer 16, with the same values of volumic density as indicated above, so as to form the alveolar structure described above with a suitable distribution of micrometric granular particles 14 enclosed in air sacs 15.

During the working of the film 10, the outer layer 13 is subjected to a suitable treatment (for example flame treatment, crown treatment, plasma treatment etc.) in order to increase its receptive capacity to coupling with a covering layer 18 bearing the desired informative images or writing located on the outside of the package 20, or also to be directly printed with suitable inks.

According to a variant, in order to further accentuate its characteristics of slipperiness with respect to a covering layer, a suitable non-volatile product is added to the inner layer 11, chosen from among PMMA, silicones or organo-silicates.

The central layer 12 advantageously consists of a homopolymer or a homopolymer/copolymer and/or homopolymer/terpolymer mixture, so as to guarantee good mechanical properties and be optimally suitable to be subjected to metallization. This treatment, in itself known, guarantees an increase in its characteristics as a barrier to gases and water vapor, ensuring better conditions of preservation of the products, particularly of dry products.

According to the invention, the film 10 has a preferential thickness of between 12 and 60 µm. The inner layer 11 and the outer layer 13 preferentially have a thickness of between 0.5 and 10 µm, while the possible interlayers 16 and 17 can have a thickness of between 1 and 20 µm.

Modifications and variants may be made to the multilayer, polypropylene and co-extruded film 10, the package 20 which uses said film 10, and the method to produce said film 10, without departing from the field and scope of the present invention.

## Claims

1. Heat-sealable multilayer polypropylene film used to make packages (20) able to be hermetically closed and easily opened, said film (10) comprising at least an inner layer (11), a central layer (12) and an outer layer (13), at least an interlayer (16) being present between said inner layer (11) and said central layer (12), said interlayer (16) consisting of a mixture of copolymer/terpolymer with the addition of a component which is able to support the working temperatures of the film (10) without melting, **characterized in that** said component is in the form of solid micrometric particles (14) and is added in a quantity such as to obtain a volumic density, intended as the distribution on a unitary volume of the intermediate layer (16), comprised between 30 and 50 kg/m³ in the case of density of said layer (16) of ≥ 0.85 g/cm³, and comprised between 10 and 30 kg/m³ in the case of density of said layer (16) of < 0.85 g/cm³, wherein said component is chosen among CaCO₃, silicon dioxide, or reticulated plastic materials such as polybutylene terephthalate (PBT), PMMA, organo-silicates or silicones.

2. Heat-sealable multilayer film as in claim 1, **characterized in that** said inner layer (11) consists of a mixture having overall a Minimum Sealing Temperature of less than 120°C, advantageously between 70°C and 105°C.

3. Heat-sealable multilayer film as in claim 1, **characterized in that** at least in the case where said film (10) is subjected to metallization, a homopolymer or a homopolymer/copolymer mix or a homopolymer/terpolymer mix suitable for metallization is used in the central layer (12).

4. Heat-sealable multilayer film as in claim 1, **characterized in that** said central layer (12) consists of a mixture of a homopolymer or homopolymer/copolymer or homopolymer/terpolymer and of CaCO₃.

5. Heat-sealable multilayer film as in claim 1, **characterized in that** said inner layer (11) consists of a mixture of copolymer/terpolymer and of at least a non-volatile product.

6. Heat-sealable multilayer film as in claim 5, **characterized in that** said non-volatile product is chosen from among PMMA, silicones and organo-silicates.

7. Heat-sealable multilayer film as in claim 1, **characterized in that** said outer layer (13) is subjected to a treatment to increase its receptivity to a covering and/or printing inks, said treatment being one or more of flame treatment, crown treatment and plasma treatment.

8. Heat-sealable multilayer film as in claim 1, **characterized in that** it comprises at least an interlayer (17) between said central layer (12) and said outer layer (13), said interlayer (17) consisting of a homopolymer or a copolymer/terpolymer.

9. Heat-sealable multilayer film as in any claim hereinbefore, **characterized in that** it preferentially has an overall thickness of between 10 and 80 µm, advantageously between 12 and 60 µm, with a thickness of the skins in a range between 0.5 and 10 µm, normally between 0.7 and 5 µm, and of the interlayers between 1 and 20 µm, normally between 2 and 10 µm.

10. Package for foodstuffs (20) using the heat-sealable multilayer film as in any of the previous claims.

11. Method to produce a heat-sealable multilayer polypropylene film (10) as in claim 1, used to make packages (20) able to be hermetically closed and easily opened, said film (10) comprising at least an inner layer (11), a central layer (12), an outer layer (13), at least an interlayer (16) being able to be positioned between said inner layer (11) and said central layer (12), **characterized in that** in the copolymer/terpolymer mixture that makes up said interlayer (16) the addition is provided of a component in the form of solid micrometric particles that is able to support the working temperatures of the film (10) without melting, in a quantity such as to obtain a volumic density, intended as the distribution on a unitary volume of the intermediate layer (16), comprised between 30 and 50 kg/m³ in the case of density of said layer (16) of ≥ 0.85 g/cm³, and comprised between 10 and 30 kg/m³ in the case of density of said layer (16) of < 0.85 g/cm³.

12. Method as in claim 11, **characterized in that** said substance is chosen from among CaCO₃, silicon dioxide, or reticulated plastic materials such as polybutylene terephthalate (PBT), PMMA, organo-silicates or silicones.

## Patentansprüche

1. Mehrschichtige Heißsiegel-Polypropylen-Folie zur Herstellung von Verpackungen (20), die hermetisch verschließbar und leicht zu öffnen sind, wobei die Folie (10) mindestens eine innere Schicht (11), eine zentrale Schicht (12) und eine äußere Schicht (13) aufweist, wobei zumindest eine Zwischenschicht (16) zwischen der inneren Schicht (11) und der zentralen Schicht (12) vorliegt, wobei die Zwischenschicht (16) aus einem Gemisch aus Copolymer/Terpolymer und einer zugegebenen Komponente besteht, welche in der Lage ist, die Betriebstemperatur der Folie (10) zu unterstützt/erhöhen, ohne zu schmelzen, **dadurch gekennzeichnet, dass** die Komponente in Form fester Teilchen von Mikrometergröße (14) vorliegt und in einer solchen Menge zugegeben wird, dass eine Volumendichte erhalten wird, gemeint als Verteilung auf/in einem Einheitsvolumen der Zwischenschicht (16), von 30 bis 50 kg/cm³, wenn die Dichte der Schicht (16) ≥ 0,85 g/cm³ beträgt, und von 10 bis 30 kg/cm³, wenn die Dichte der Schicht (16) < 0,85 g/cm³ beträgt, worin die Komponente aus CaCO₃, Siliciumdioxid oder retikulierten Kunststoffmaterialien wie Polybutylenterephthalat (PBT), PMMA, Organosilikaten oder Silikonen ausgewählt ist.

2. Mehrschichtige Heißsiegel-Folie nach Anspruch 1, **dadurch gekennzeichnet, dass** die innere Schicht (11) aus einem Gemisch besteht, welches als Ganzes eine minimale Versiegelungstemperatur von weniger als 120°C, bevorzugt 70°C bis 105°C, aufweist.

3. Mehrschichtige Heißsiegel-Folie nach Anspruch 1, **dadurch gekennzeichnet, dass** zumindest in dem Fall, in dem die Folie (10) einer Metallisierung unterzogen wird, ein Homopolymer oder ein Homopolymer/Copolymer-Gemisch oder ein Komopolymer/Terpolymer-Gemisch, welches zur Metallisierung geeignet ist, in der zentralen Schicht (12) verwendet wird.

4. Mehrschichtige Heißsiegel-Folie nach Anspruch 1, **dadurch gekennzeichnet, dass** die zentrale Schicht (12) aus einem Gemisch eines Homopolymers oder Homopolymers/Copolymers oder Homopolymers/Terpolymers und aus CaCO₃ besteht.

5. Mehrschichtige Heißsiegel-Folie nach Anspruch 1, **dadurch gekennzeichnet, dass** die innere Schicht (11) aus einem Gemisch aus Copolymer/Terpolymer und mindestens einem nicht flüchtigen Produkt besteht.

6. Mehrschichtige Heißsiegel-Folie nach Anspruch 5, **dadurch gekennzeichnet, dass** das nicht flüchtige Produkt aus PMMA, Siliconen und Organosilikaten ausgewählt ist.

7. Mehrschichtige Heißsiegel-Folie nach Anspruch 1, **dadurch gekennzeichnet, dass** die äußere Schicht (13) einer Behandlung unterzogen wird, um deren Empfänglichkeit gegenüber einer Beschichtung und/oder gegenüber Druckfarben zu erhöhen, wobei diese Behandlung eine Flammbehandlung, Coronabehandlung oder Plasmabehandlung oder eine Kombination davon ist.

8. Mehrschichtige Heißsiegel-Folie nach Anspruch 1, **dadurch gekennzeichnet, dass** diese mindestens eine Zwischenschicht (17) zwischen der zentralen Schicht (12) und der äußeren Schicht (13) aufweist, wobei die Zwischenschicht (17) aus einem Homopolymer oder einem Copolymer/Terpolymer besteht.

9. Mehrschichtige Heißsiegel-Folie nach einem der vorhergehenden Ansprüche, **dadurch gekennzeichnet, dass** diese bevorzugt eine Gesamtdicke von 10 bis 80 µm, bevorzugt 12 bis 60 µm, aufweist, mit einer Dicke der Außenhäute in einem Bereich von 0,5 bis 10 µm, normalerweise von 0,7 bis 5 µm, und der Zwischenschichten von 1 bis 20 µm, normalerweise 2 bis 10 µm.

10. Verpackung für Lebensmittel (20), bei welcher die mehrschichtige Heißsiegel-Folie nach einem der vorhergehenden Ansprüche verwendet wird.

11. Verfahren zur Herstellung einer mehrschichtigen Heißsiegel-Polypropylen-Folie nach Anspruch 1, die zur Herstellung von Verpackungen (20), die hermetisch verschließbar und leicht zu öffnen sind, verwendet wird, wobei die Folie (10) mindestens eine innere Schicht (11), eine zentrale Schicht (12), eine äußere Schicht (13), mindestens eine Zwischenschicht (16), die zwischen der inneren Schicht (11) und der zentralen Schicht (12) positionierbar ist, aufweist, **dadurch gekennzeichnet, dass** in dem Copolymer/Terpolymer-Gemisch, welches die Zwischenschicht (16) bildet, die Zugabe einer Komponente in Form fester Teilchen von Mikrometergröße vorgesehen ist, welche die Betriebstemperatur der Folie (10) fördern/erhöhen kann, ohne zu schmelzen, in einer solchen Menge, dass eine Volumendichte erhalten wird, gemeint als Verteilung auf/in einem einheitlichen Volumen der Zwischenschicht (16), von 30 bis 50 kg/m³ im Fall einer Dichte der Schicht (16) von ≥ 0,85 g/cm³, und von 10 bis 30 kg/m³ im Fall einer Dichte der Schicht (16) von < 0,85 g/cm³.

12. Verfahren nach Anspruch 11, **dadurch gekennzeichnet, dass** die Substanz aus CaCO₃, Siliciumdioxid oder retikulierten Kunststoffmaterialien, wie Polybutylenterephthalat (PBT), PMMA, Organosilikaten oder Siliconen ausgewählt wird.

## Revendications

1. Film de polypropylène multicouche thermoscellable utilisé pour produire des emballages (20) pouvant être hermétiquement fermés et facilement ouverts, ledit film (10) comprenant au moins une couche intérieure (11), une couche centrale (12) et une couche extérieure (13), au moins une couche intermédiaire (16) étant présente entre ladite couche intérieure (11) et ladite couche centrale (12), ladite couche intermédiaire (16) étant constituée d'un mélange de copolymère/terpolymère avec l'addition d'un composant qui est capable de supporter les températures de travail du film (10) sans fondre, **caractérisé en ce que** ledit composant est sous la forme de particules solides de l'ordre du micromètre (14) et est ajouté en une quantité telle que soit obtenue une masse volumique, qu'il faut comprendre comme étant la distribution, par unité de volume, de la couche intermédiaire (16), comprise entre 30 et 50 kg/m³ dans le cas ou la masse volumique de ladite couche (16) est > 0,85 g/cm³, et comprise entre 10 et 30 kg/m³ dans le cas ou la masse volumique de ladite couche (16) est < 0,85 g/cm³, dans lequel ledit composant est choisi parmi CaCO₃, le dioxyde de silicium, et les matières plastiques réticulées telles que le poly(téréphtalate de butylène) (PBT), le PMMA, les organosilicates ou les silicones,

2. Film multicouche thermoscellable selon la revendication 1, **caractérisé en ce que** ladite couche intérieure (11) est constituée d'un mélange ayant globalement une température de scellement minimale inférieure à 120 °C, avantageusement comprise entre 70 °C et 105 °C.

3. Film multicouche thermoscellable selon la revendication 1, **caractérisé en ce qu'**au moins dans le cas où ledit film (10) est soumis à une métallisation, un homopolymère ou un mélange d'homopolymère/copolymère ou un mélange d'homopolymère/terpolymère convenant pour une métallisation est utilisé dans la couche centrale (12).

4. Film multicouche thermoscellable selon la revendication 1, **caractérisé en ce que** ladite couche centrale (12) est constituée d'un mélange d'un homopolymère ou d'un homopolymère/copolymère ou d'un homopolymère/terpolymère et de CaCO₃.

5. Film multicouche thermoscellable selon la revendication 1, **caractérisé en ce que** ladite couche intérieure (11) est constituée d'un mélange de copolymère/terpolymère et d'au moins un produit non volatil.

6. Film multicouche thermoscellable selon la revendication 5, **caractérisé en ce que** ledit produit non volatil est choisi parmi le PMMA, les silicones et les organosilicates.

7. Film multicouche thermoscellable selon la revendication 1, **caractérisé en ce que** ladite couche extérieure (13) est soumise à un traitement pour augmenter sa réceptivité à un revêtement et/ou à des encres d'impression, ledit traitement étant un ou plusieurs parmi un traitement à la flamme, un traitement par décharge couronne et un traitement par plasma.

8. Film multicouche thermoscellable selon la revendication 1, **caractérisé en ce qu'**il comprend au moins une couche intermédiaire (17) entre ladite couche centrale (12) et ladite couche extérieure (13), ladite couche intermédiaire (17) étant constituée d'un homopolymère ou d'un copolymère/terpolymère.

9. Film multicouche thermoscellable selon l'une quelconque des revendications précédentes, **caractérisé en ce qu'**il a de préférence une épaisseur globale comprise entre 10 et 80 µm, avantageusement entre 12 et 60 µm, avec une épaisseur de peau située dans la plage comprise entre 0,5 et 10 µm, normalement entre 0,7 et 5 µm, et celle des couches intermédiaires comprise entre 1 et 20 µm, normalement entre 2 et 10 µm.

10. Emballage pour produits alimentaires (20) utilisant le film multicouche thermoscellable de l'une quelconque des revendications précédentes.

11. Procédé pour produire un film de polypropylène multicouche thermoscellable (10) selon la revendication 1, utilisé pour produire des emballages (20) pouvant être hermétiquement fermés et facilement ouverts, ledit film (10) comprenant au moins une couche intérieure (11), une couche centrale (12), une couche extérieure (13), au moins une couche intermédiaire (16) susceptible d'être positionnée entre ladite couche intérieure (11) et ladite couche centrale (12), **caractérisé en ce que**, dans le mélange de copolymére/terpolymère qui constitue ladite couche intermédiaire (16), est ajouté un composant sous la forme de particules solides de l'ordre du micromètre qui est capable de supporter les températures de travail du film (10) sans fondre, en une quantité telle que soit obtenue une masse volumique, qu'il faut comprendre comme étant la distribution, par unité de volume, de la couche intermédiaire (16), comprise entre 30 et 50 kg/m³ dans le cas où la masse volumique de ladite couche (16) est ≥ 0,85 g/cm³, et comprise entre 10 et 30 kg/m³ dans le cas où la masse volumique de ladite couche (16) est 0,85 g/cm³.

12. Procédé selon la revendication 11, **caractérisé en ce que** ladite substance est choisie parmi le CaCO₃, le dioxyde de silicium, et les matières plastiques réticulées telles que le poly(téréphtalate de butylène) (PBT), le PMMA, les organosilicates ou les silicones.
